# EUROPÄISCHE PATENTANMELDUNG

(11) **EP 3 789 661 A1**
(43) Veröffentlichungstag der Anmeldung: **10.03.2021**
(21) Anmeldenummer: 20192796.9
(22) Anmeldetag: 26.08.2020
(51) Int. Cl.: F21S 45/60, F21S 41/13, F21S 41/176, F21S 41/20, F21S 43/16, F21S 43/20

(54) **LEUCHTE EINES FAHRZEUGS MIT EINER ABSCHLUSSSCHEIBE**

(30) Priorität: 04.09.2019 DE 102019123660
(71) Anmelder: HELLA GMBH & CO. KGAA, 59552 Lippstadt (DE)
(72) Erfinder: GRÖNE, Stefan, 33034 Brakel (DE); HANSEN, Julien, 33102 Paderborn (DE); LOTT, Philipp, 45721 Haltern am See (DE); SAFTIG, Arne Sebastian, 33790 Halle Westf. (DE)

(57) **Zusammenfassung**

Gegenstand der Erfindung ist eine Leuchte eines Fahrzeugs mit einer Abschlussscheibe (1), wobei die Leuchte ein Leuchtmittel zur Erzeugung von Licht (4) aufweist, wobei die Leuchte Mittel zur Verschiebung der Wellenlänge zumindest eines Teils des durch das Leuchtmittel erzeugten Lichts (4) im sichtbaren, kurzwelligen Bereich, in eine Strahlung im langwelligen Wellenlängenbereich aufweist, wobei das Mittel in der Leuchte derart angeordnet ist, dass die vom Mittel erzeugte langwellige Strahlung (9) auf die Abschlussscheibe (1) zugerichtet ist.

## Beschreibung

Die vorliegende Erfindung betrifft eine Leuchte eines Fahrzeugs mit einer Abschlussscheibe, wobei die Leuchte ein Leuchtmittel zur Erzeugung von Licht aufweist.

Die Wellenlänge von sichtbarem Licht befindet sich im Bereich von etwa 380 nm bis ca. 780 nm.

Leuchten an einem Fahrzeug sind insbesondere als Frontscheinwerfer und als Rückleuchten eines Fahrzeugs bekannt. Diese umfassen ein oder mehrere Leuchtmittel z. B. LED's, die im Bereich eines Reflektors angeordnet sind, sowie eine Abschlussscheibe, die mit dem rückwärtigen Gehäuse dafür sorgt, dass der Scheinwerfer bzw. auch die Rückleuchte feuchtigkeitsdicht verschlossen sind.

Problematisch an diesen Leuchten, also sowohl den Frontscheinwerfern wie auch den Rückleuchten ist, dass bei kalten Temperaturen sich durch Kondensation an der Abschlussscheibe dieser Leuchten Eisschichten bilden. Bei Fahrtbeginn führen diese Eisschichten dazu, dass das erzeugte Licht des vereisten Scheinwerfers in der Eisschicht absorbiert und auch ungerichtet abgelenkt wird, das heißt, das Licht in ungewollte Bereiche der Fahrbahn, z. B. in den Gegenverkehr, reflektiert oder gelenkt wird.

Wenn im Folgenden die Rede von Scheinwerfern ist, gilt dies in gleicher Weise auch für Rückleuchten.

Aufgrund der relativ effizienten LED-Lichtquellen in modernen Scheinwerfern erfolgt ein Auftauen der Abschlussscheibe nur sehr langsam, da die Wärmeabgabe durch Infrarot-Strahlung des Scheinwerfers verhältnismäßig gering ist. Dies auch deshalb, weil bei einer LED die Wärme hauptsächlich auf der Rückseite und damit in entgegengesetzter Richtung zur Abschlussscheibe abgegeben wird. Das heißt, dass Zeiten von bis zu 30 Minuten vergehen können, bis bei einem solchen Scheinwerfer die Abschlussscheibe aufgetaut ist. Darüber hinaus kann es bei Schneefall zu einem Zuschneien des Scheinwerfers kommen, wodurch die Funktionsleistung des Scheinwerfers signifikant eingeschränkt wird.

Insofern ist bereits bekannt, Widerstandsheizelemente in Form von dünnen Drähten in der Abschlussscheibe anzuordnen. Diese beeinflussen nicht nur das Aussehen, sondern auch die Beleuchtungsstärkeverteilung des Scheinwerfers. Darüber hinaus gibt es transparente Widerstandsheizelemente in Form von Folien, wie sie auch in Frontscheiben von Fahrzeugen zum Einsatz gelangen. Diese sind bedingt durch die Krümmung der Abschlussscheiben der Scheinwerfer aufgrund der beim Aufbringen der Folien bestehenden Gefahr der Faltenbildung nicht geeignet.

Unabhängig hiervon gilt bei Widerstandsheizelementen in Form von dünnen Drähten oder auch basierend auf Folien, die die erforderliche Heizwärmeleistung zusätzlich zur Abwärme des Scheinwerfers erzeugen, dass zum energieeffizienten Betrieb Sensoren zur Temperaturerfassung und Steuerelemente zur Regelung erforderlich sind. Beides macht einen solchen Scheinwerfer verhältnismäßig teuer.

Ebenfalls ist bekannt im Bereich der Leuchte, also beispielsweise des Frontscheinwerfers, Infrarotstrahler unterzubringen. Diese erfordern entsprechende weitere Lichtquellen mit jeweils einer gesonderten Stromversorgung und einer entsprechenden Steuerelektronik.

Auch bekannt ist die Nutzung der Wärme von LED-Modulen über einen konvektiven Luftstrom, was durch den Einsatz von Lüftern zusätzlichen Bauraum für die Führung des Luftstroms von LED-Modulen zur Abschlussscheibe erforderlich macht.

Die der Erfindung zugrunde liegende Aufgabe besteht demzufolge darin, auf einfache Art und Weise das Auftauen einer zugefrorenen Leuchte, z. B. eines Scheinwerfers zu ermöglichen, und auch ein erneutes Zufrieren der Leuchte, durch beispielsweise Schneefall während der Fahrt, zu verhindern.

Zur Lösung der Aufgabe wird erfindungsgemäß vorgeschlagen, dass die Leuchte Mittel zur Verschiebung der Wellenlänge zumindest eines Teils des durch das Leuchtmittel erzeugten Lichts im sichtbaren kurzwelligen Bereich in eine Strahlung im langwelligen Wellenlängenbereich aufweist, wobei das Mittel in der Leuchte derart angeordnet ist, dass die von dem Mittel erzeugte langwellige Strahlung auf die Abschlussscheibe zugerichtet ist. Die langwellige Strahlung kann hierbei unmittelbar oder mittelbar, z. B. durch Linsen, Reflektoren oder Lichtleiter, in Richtung der Abschlussscheibe gerichtet sein.

Hieraus wird deutlich, dass beispielsweise das sichtbare Licht, erzeugt z. B. durch eine LED-Quelle, zumindest partiell dazu verwendet wird, dieses durch die Mittel in einen langwelligen Bereich zu überführen, insbesondere in einen Wellenlängenbereich oberhalb des sichtbaren Lichts (von 780 nm bis 8000 nm), um durch die Infrarotstrahlung die Abschlussscheibe von Eis und Schnee freizuhalten. Zum weiteren Verständnis sei darauf hingewiesen, dass die Überführung des sichtbaren, kurzwelligen Lichts in den langwelligen Bereich auch nur anteilig erfolgen kann, das heißt, das Licht wird nur partiell in den Infrarotbereich verschoben. Beides, das heißt sowohl die vollständige, wie auch die partielle Verschiebung fällt unter die Erfindung.

Vorteilhafte Merkmale und Ausgestaltungen der Erfindung ergeben sich aus den Unteransprüchen.

So ist nach einem besonderen Merkmal der Erfindung vorgesehen, dass das Mittel zur Verschiebung einer kurzwelligen Strahlung in eine langwellige Strahlung eine wellenlängenverschiebende Beschichtung aufweist. Durch eine solche wellenlängenverschiebende Beschichtung wird das Licht, welches eine Wellenlänge von ca. 380 bis ca. 780 nm aufweist, zumindest partiell in den Infrarotbereich hineinverschoben, um durch die dabei entstehende Infrarotstrahlung die Abschlussscheibe von Eis und Schnee freizuhalten. Vorteilhaft ist hierbei der verhältnismäßig hohe Wirkungsgrad, bedingt dadurch, dass die Infrarotstrahlung dort entsteht, wo sie benötigt wird.

Hierbei kann nach der Erfindung vorgesehen sein, dass die wellenlängenverschiebende Beschichtung auf der Abschlussscheibe angeordnet ist. In diesem Zusammenhang besteht nach zwei Varianten die Möglichkeit, zum einen die wellenlängenverschiebende Beschichtung auf der Innenseite der Abschlussscheibe anzuordnen oder auch auf der Außenseite der Abschlussscheibe.

Die Anordnung der wellenlängenverschiebenden Beschichtung auf der Außenseite der Abschlussscheibe hat den Vorteil, dass die Infrarotstrahlung eine direkte Erwärmung und damit Aufschmelzung des Eises bzw. des Schnees auf der Abschlussscheibe ermöglicht, wenn Eis und Schnee für den langwelligen Bereich der Infrarotstrahlung, in dem die Verschiebung stattgefunden hat, absorbierend sind.

Alternativ besteht die Möglichkeit, auf der Innenseite der Abschlussscheibe die wellenlängenverschiebende Beschichtung anzuordnen. Hierbei kann die Infrarotstrahlung einen Wellenlängenbereich aufweisen, bei dem die Infrarotstrahlung zumindest partiell in der Abschlussscheibe absorbiert wird, was zu einer unmittelbaren Erwärmung der Abschlussscheibe führt, was indirekt das Aufschmelzen des Eises und des Schnees auf der Außenseite der Abschlussscheibe bewirkt. Der Wirkungsgrad gegenüber der ersten Variante ist hierbei etwas schlechter, bedingt durch die Aufheizung der Abschlussscheibe. Denkbar ist aber auch die Abschlussscheibe zumindest für einen Teil der Infrarotstrahlung, also in einem bestimmten Wellenlängenbereich, transmittierend auszubilden, sodass das Eis sowohl indirekt durch die durch Absorption erwärmte Abschlussscheibe als auch direkt durch die transmittierte und von Eis absorbierte Strahlung geschmolzen wird.

Nach einem weiteren Merkmal der Erfindung ist vorgesehen, dass die wellenlängenverschiebende Beschichtung als Fluoreszenzschicht ausgebildet ist. Trifft sichtbares Licht auf eine fluoreszierende Schicht, so findet in gewissem Umfang eine Verschiebung der Wellenlänge hin zur größeren Wellenlänge statt, das heißt, es entstehen in der Strahlung des Lichts Infrarotanteile, die dann für die Eis- und Schneefreiheit der Abschlussscheibe des Scheinwerfers oder der Rückleuchte sorgen.

Eine weitere Variante zeichnet sich dadurch aus, dass das Mittel zur Verschiebung von kurzwelligem Licht in eine langwellige Strahlung ein in der Abschlussscheibe angeordneter Stoff ist. Hierbei kann vorgesehen sein, eine entsprechende Schicht zur Verschiebung von kurzwelligem Licht in langwellige Strahlung in der Abschlussscheibe zu integrieren; alternativ besteht die Möglichkeit, in das Material der Abschlussscheibe vor deren Formgebung, z. B. durch Spritzgießen, ein entsprechendes wellenlängenverschiebendes Material im Sinne einer Compoundierung beizumischen.

Insbesondere ist vorgesehen, dass der Stoff fluoreszierend ist. Das heißt, auch bei dieser Variante kann kurzwelliges Licht zumindest partiell in langwellige Infrarotstrahlung überführt werden, wobei dann durch die langwellige Strahlung mit einem bestimmten Wellenlängenbereich die Abschlussscheibe durch Absorption erwärmt wird, aber auch ein Teil der langwelligen Strahlung durch die Abschlussscheibe hindurchtritt und unmittelbar von der Eis- oder Schneeschicht auf die Abschlussscheibe absorbiert wird, und diese zum Abschmelzen veranlasst. Insbesondere kann vorgesehen sein, dass der Stoff als Schicht in der Abschlussscheibe angeordnet ist.

Nach einer Ausführungsform wird das Streulicht im Scheinwerfer für die Wellenlängenverschiebung in langwellige Strahlung genutzt, wobei im Innenbereich der Leuchte das Mittel zur Verschiebung des kurzwelligen Lichts eine langwellige Strahlung als eine Schicht ausgebildet ist, die im Streulicht angeordnet ist. Die langwellige Strahlung, welche durch die Wellenlängenverschiebung des Streulichts entsteht, ist hierbei eine solche, die entweder unmittelbar im Scheinwerfer durch das Leuchtmittel und gegebenenfalls in Verbindung mit dem Reflektor erzeugt wird, oder aber bei Vereisung der Abschlussscheibe sich als Licht darstellt, das von dem Eis/Schnee in das Innere des Scheinwerfers reflektiert wird.

Hierbei besteht die Möglichkeit, die Schicht auf dem Reflektor der Leuchte anzuordnen oder im Innern der Leuchte eine solche Schicht derart anzuordnen, dass durch die Schicht eine langwellige Strahlung auf die Abschlussscheibe zugerichtet ist. Je nachdem, für welche Wellenlänge die Abschlussscheibe durchlässig ist, führt dies dann entweder zu einer Erwärmung der Abschlussscheibe und/oder die Strahlung wird von der Eis-/Schneeschicht absorbiert, wie dies bereits an anderer Stelle erläutert wurde. Vorteilhaft hierbei ist, dass keine elektronischen oder elektrischen Komponenten erforderlich sind, und dadurch, dass die langwellige Strahlung, welche durch die Wellenlängenverschiebung des Streulichts entsteht, also auch durch solches sichtbares Licht, welches in der Eis-/Schneeschicht ins Innere des Scheinwerfers reflektiert wird, sich hierdurch ein selbstregulierender Effekt einstellt, der sich dadurch auszeichnet, dass die erzeugte Infrarotstrahlung bei abgeschlossener Enteisung der Abschlussscheibe sich weitgehend selbst herunter regelt.

Das Prinzip ist bei allen Varianten oder Ausführungsformen schlussendlich das gleiche; es besteht darin, mit einem Material, z. B. einer fluoreszierender Schicht oder Beschichtung, durch zumindest eine partielle Absorption kurzwelligen Lichtes im Bereich von ca. 380 nm bis 780 nm eine Emission einer langwelligen Strahlung im Bereich von über 780 nm, insbesondere im Bereich von 780 nm bis 8.000 nm zu bewirken, also einen Bereich, den man üblicherweise als nahes und mittleres Infrarot bezeichnet. Die Infrarotstrahlung in diesem Bereich wird auch als thermische Strahlung bei irdischen Temperaturen bezeichnet.

Anhand der Zeichnungen wird die Erfindung nachstehend beispielhaft näher erläutert.
- Fig. 1: zeigt schematisch die Wirkungsweise der wellenlängenverschiebenden Beschichtung bei Anordnung auf der Innenseite der Abschlussscheibe;
- Fig. 2: zeigt schematisch die Wirkungsweise der wellenlängenverschiebenden Beschichtung bei Anordnung auf der Außenseite der Abschlussscheibe;
- Fig. 3: zeigt schematisch die Abschlussscheibe mit einer innenliegenden Wellenlänge verschiebender Beschichtung;
- Fig. 4: zeigt schematisch das Streulicht, entstanden zum einen als direktes Licht durch das Leuchtmittel und zum anderen entstanden durch das reflektierte sichtbare Licht am Eis/Schnee auf der Abschlussscheibe.

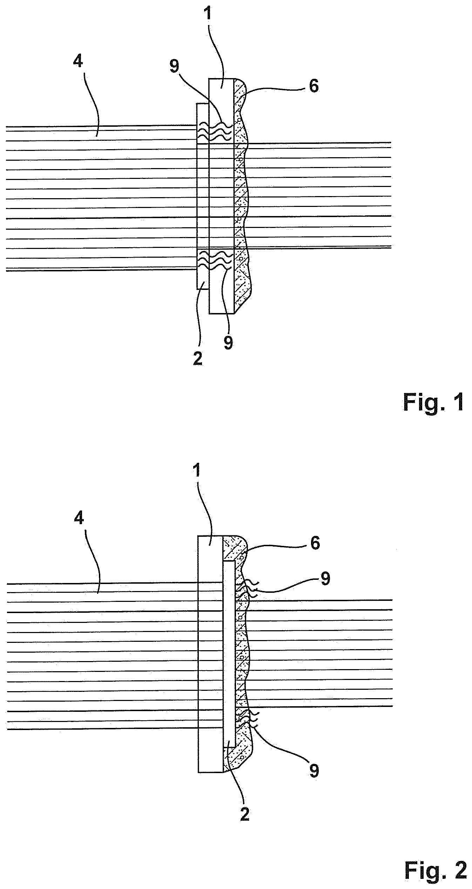

In den Figuren sind für gleiche Gegenstände identische Bezugszeichen verwenden worden. Die Abschlussscheibe 1 zeigt bei der Ausführungsform gemäß Fig. 1 eine wellenlängenverschiebende Beschichtung in Form einer fluoreszierenden Beschichtung 2 auf der Innenseite der Abschlussscheibe. Die Abschlussscheibe und die Beschichtung bilden hierbei ein Bauteil. Beispielhaft ist in der Fig. 1 vorgesehen, dass das durch das Leuchtmittel (nicht dargestellt) erzeugte sichtbare Licht 4 auf die wellenlängenverschiebende Beschichtung 2 auf der Abschlussscheibe trifft; hierbei werden z. B. 20 % des sichtbaren Lichts durch die wellenlängenverschiebende Beschichtung 2 in die langwellige Strahlung 9 im Infrarotbereich überführt; die restlichen 80 % stehen als ausgehendes sichtbares Licht für die Ausleuchtung, z. B. der Straße, zur Verfügung. Die 20 % des sichtbaren Lichtes, welches in einen langwelligen Bereich verschoben wird, dienen der Erwärmung der Abschlussscheibe 1 durch Absorption und/oder durch Absorption in der Eis-/Schneeschicht auf der Abschlussscheibe und sorgen für das Abschmelzen der Eis- oder Schneeschicht 6.

Gemäß Fig. 2 ist vorgesehen, dass die wellenlängenverschiebende Beschichtung 2 auf der Außenseite der Abschlussscheibe 1 angeordnet ist, sodass die durch die wellenlängenverschiebende Beschichtung, z. B. durch eine fluoreszierende Beschichtung, erzeugte Infrarotstrahlung 9 unmittelbar für ein Aufschmelzen der Eis- und Schneeschicht 6 durch Absorption in der Eis-/Schneeschicht zur Verfügung steht. Auch hier gilt, dass das sichtbare Licht eine Aufteilung durch die wellenlängenverschiebende Beschichtung erfährt, und zwar zu einem Teil, im vorliegenden Fall z. B. 20 %, zu einer Strahlung 9 im Infrarotbereich.

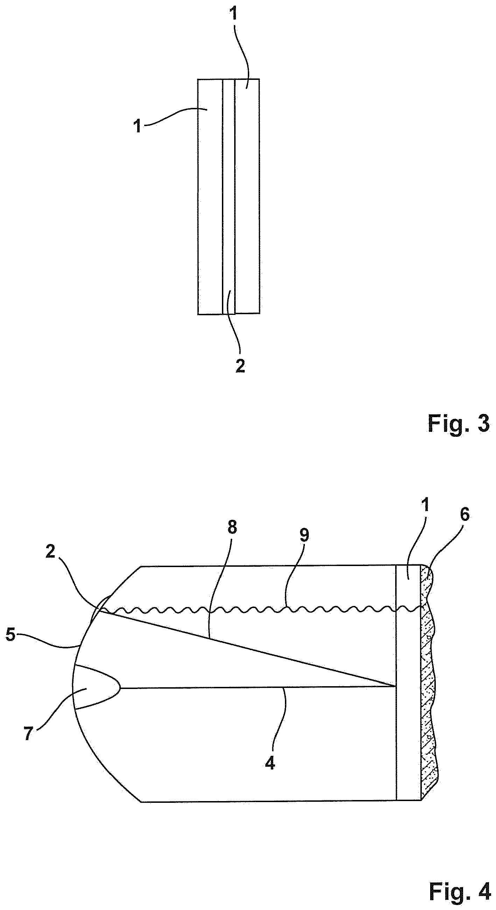

Gemäß Fig. 3 ist vorgesehen, dass die dort schematisch dargestellte aus zwei Teilen ausgebildete Abschlussscheibe 1 im Innern eine Beschichtung 2 oder Schicht aus einem wellenlängenverschiebenden Material aufweist, beispielsweise eine Fluoreszenzschicht.

Bei der Darstellung gemäß Fig. 4 ist wiederum ein durch ein Leuchtmittel 7 erzeugtes Licht 4 im kurzwelligen sichtbaren Bereich vorgesehen, wobei von diesem Licht Streulicht 8 bedingt z. B. durch die Eisschicht 6 abgeht, beispielsweise an der Beschichtung 2 mit einem fluoreszierenden Stoff, z. B. am Reflektor 5 auftrifft, und dort zumindest partiell absorbiert, und als langwellige Strahlung emittiert wird. Hierbei ist die emittierte Strahlung 9 mit Anteilen im Infrarotbereich auf die Abschlussscheibe 1 zugerichtet, wobei diese durch Absorption erwärmt wird und/oder die langwellige Strahlung 9 durch die Abschlussscheibe 1 hindurchtritt, auf die Eis-/Schneeschicht 6 trifft, und dort zum direkten Abschmelzen des Eises bzw. des Schnees führt.

### Bezugszeichenliste:

- 1: Abschlussscheibe
- 2: Beschichtung
- 4: Licht
- 5: Reflektor
- 6: Eis- und Schneeschicht
- 7: Leuchtmittel
- 8: Streulicht
- 9: Strahlung (im langwelligen Bereich)

## Patentansprüche

1. Leuchte eines Fahrzeugs mit einer Abschlussscheibe (1), wobei die Leuchte ein Leuchtmittel zur Erzeugung von Licht (4) aufweist, **dadurch gekennzeichnet,**
**dass** die Leuchte Mittel zur Verschiebung der Wellenlänge zumindest eines Teils des durch das Leuchtmittel erzeugten Lichts (4) im sichtbaren, kurzwelligen Bereich in eine Strahlung im langwelligen Wellenlängenbereich aufweist, wobei das Mittel in der Leuchte derart angeordnet ist, dass die vom Mittel erzeugte langwellige Strahlung (9) auf die Abschlussscheibe (1) zugerichtet ist.

2. Leuchte nach Anspruch 1,
**dadurch gekennzeichnet,**
**dass** das Mittel zur Verschiebung einer kurzwelligen Strahlung in eine langwelligen Strahlung als eine wellenlängenverschiebende Beschichtung (2) ausgebildet ist.

3. Leuchte nach Anspruch 2,
**dadurch gekennzeichnet,**
**dass** die wellenlängenverschiebende Beschichtung (2) auf der Abschlussscheibe (1) angeordnet ist.

4. Leuchte nach Anspruch 2 oder 3,
**dadurch gekennzeichnet,**
**dass** die wellenlängenverschiebende Beschichtung (2) auf der Innenseite der Abschlussscheibe (1) angeordnet ist.

5. Leuchte nach einem der Ansprüche 2 bis 4,
**dadurch gekennzeichnet,**
**dass** die wellenlängenverschiebende Beschichtung (2) auf der Außenseite der Abschlussscheibe (1) angeordnet ist.

6. Leuchte nach einem der Ansprüche 2 bis 5,
**dadurch gekennzeichnet,**
**dass** die wellenlängenverschiebende Beschichtung (2) als Fluoreszenzschicht ausgebildet ist.

7. Leuchte nach Anspruch 1,
**dadurch gekennzeichnet,**
**dass** das Mittel zur Verschiebung einer kurzwelligen Strahlung in eine langwelligen Strahlung als in der Abschlussscheibe (1) angeordneter Stoff ist.

8. Leuchte nach Anspruch 7,
**dadurch gekennzeichnet,**
**dass** der Stoff fluoreszierend ist.

9. Leuchte nach Anspruch 7 oder 8,
**dadurch gekennzeichnet,**
**dass** der Stoff als Schicht (2) in der Abschlussscheibe (1) angeordnet ist.

10. Leuchte nach einem der Ansprüche 7 bis 9,
**dadurch gekennzeichnet,**
**dass** der Stoff dem Material für die Abschlussscheibe vor deren Formgebung beigemischt wird.

11. Leuchte nach Anspruch 1,
**dadurch gekennzeichnet,**
**dass** das Licht als Streulicht (8) ausgebildet ist, wobei im Innenbereich der Leuchte, das Mittel zur Verschiebung einer kurzwelligen Strahlung in eine langwellige Strahlung als eine Beschichtung (2) ausgebildet ist, z. B. aus einem fluoreszierenden Material, die im Streulicht (8) angeordnet ist.

12. Leuchte nach Anspruch 10,
**dadurch gekennzeichnet,**
**dass** die Beschichtung (2) auf jeglicher Fläche im Inneren der Leuchte anordbar ist, z. B. auf dem Reflektor, dem Abdeckrahmen oder einer Modulblende.
